# EUROPÄISCHE PATENTANMELDUNG

(11) **EP 1 081 042 A2**
(43) Veröffentlichungstag der Anmeldung: **07.03.2001**
(21) Anmeldenummer: 00116495.3
(22) Anmeldetag: 31.07.2000
(51) Int. Cl.: B64C 1/00, B23K 20/12

(54) **Grossflächiges Strukturbauteil für ein Flugzeug und Verfahren zur Herstellung des Strukturbauteils**

(30) Priorität: 03.09.1999 DE 19941924; 17.12.1999 DE 19960909
(71) Anmelder: EADS Airbus GmbH, 21129 Hamburg (DE)
(72) Erfinder: Brenneis, Hartmut, Dipl.-Ing., 21709 Düdenbüttel (DE); Gedrat, Olaf, Dr., 26954 Nordenham (DE); Zink, Walter, Dipl.-Ing., 28357 Bremen (DE); Broden, Günter, Dipl.-Ing., 28201 Bremen (DE)
(74) Vertreter: Hansmann, Dierk, Dipl.-Ing.

(57) **Zusammenfassung**

Bei einem großflächigen Strukturbauteil (1) für ein Flugzeug, welches aus mindestens einem Hautfeld (1A) besteht, besteht die Erfindung darin, dass das Hautfeld (1A) aus einer Vielzahl von Strukturelementen (16;23;21,22,31-37,41-45,51-53) gebildet ist, wobei die Strukturelemente entsprechend der Anforderungen und Belastungen in Material und Dicke auswählbar und mittels Schweißfügeverfahren verbindbar sind.

Verfahren zur Herstellung eines großflächigen Strukturbauteils (1) sowie zur Herstellung von Profilteilen sind ebenfalls angegeben.

Es ist nunmehr möglich, dass Hautbleche nicht mehr in den größtmöglichen Abmessungen verwendet werden, die dann mit aufwendigen Verfahren zusätzlich verstärkt bzw. Blechdicke abgetragen werden muß, um ein gewichtssparendes Strukturbauteil (1) zu erzielen. Es können kleinere Hautbleche oder Strangpresspanels, die im Fertigungsverfahren einfacher zu handhaben sind, zu großen Schalen zusammengefügt werden. So können insbesondere Rumpfschalen in einer Größe gefertigt werden, die mit bisherigen Fertigungsvorrichtungen noch nicht möglich sind.

## Beschreibung

Die Erfindung betrifft ein großflächiges Strukturbauteil für ein Flugzeug, welches aus mindestens einem Hautfeld besteht und ein Verfahren zur Herstellung eines großflächigen Strukturbauteils.

Bei der derzeitigen Fertigung von großflächigen Strukturbauteilen, insbesondere Rumpfschalen für ein Flugzeug, werden Hautbleche bzw. Hautfelder mit Abmessungen von ca. 2,5 m x 10 m verwendet. Es wird für die Herstellung der Rumpfschale die maximal mögliche Größe verwendet, um die Anzahl der Längs- und Quernähte und damit das Gewicht des Flugzeugrumpfes zu minimieren. Die Minimierung des Strukturgewichtes spielt im Flugzeugbau bezüglich des Energiebedarfes und daher für die Wirtschaftlichkeit eines Flugzeuges eine wichtige Rolle. Eine Gewichtsminimierung bedingt eine strukturmechanische Optimierung und somit sind die Hautbleche je nach Beanspruchung unterschiedlich dick ausgeführt. Beispielsweise können Aufdickungen am Hautblech im Bereich der Stringeranbindung notwendig sein. Die unterschiedlichen Dickenbereiche des Hautbleches werden derzeit üblicherweise durch eine Blech/Blech-Vernietung oder Blech/Blech-Klebung oder mechanisches Fräsen oder durch Chemisch-Abtragen erzeugt. Das Chemisch-Abtragen eines Hautblechs erfolgt durch Maskieren der Bleche, Schneiden und partielles Entfernen der Maske und chemisches Abtragen der freigelegten Fläche. Die Hautbleche werden zu sogenannte Halbschalen zusammengefügt, wobei als Fügeverfahren sowohl das Nieten als auch das Kleben eingesetzt wird. Vor dem Nietvorgang werden die Bleche und Stringer zum Oberflächenschutz anodisiert, grundiert, an den Fügeflächen mit Aktivator gereinigt und mit einer Flächendichtung versehen. Anschließend werden die Stringer angepaßt und mit Heftnieten fixiert. Das Nieten erfolgt automatisch, wobei an den Fügestellen Dichtmittel austritt, die eine Dichtraupe bildet, welche per Hand zu glätten ist und durch eine Schutzschicht gegen aggressive Medien geschützt werden muß. Beim Kleben werden Hautbleche und Doppler durch Konturfräsen aus Halbzeugtafeln hergestellt. Die Stringer sind Blechprofile oder Strangpressprofile, welche abgelängt und anschließend umgeformt werden. Vor dem Klebevorgang erhalten die Einzelteile eine spezielle Klebevorbehandlung. Sie werden entfettet, gereinigt, gebeizt, in Chromsäure anodisiert und anschließend geprimert. Für das Kleben werden die Klebeflächen mit einer Klebefolie versehen, die Einzelteile zusammengelegt und mit Fixierschrauben geheftet. Im Autoklaven wird der Klebstoff unter Temperatur-, Druck- und Zeiteinfluß gehärtet. Danach muß das Bauteil gereinigt werden und als Korrosionsschutz mit einer Dichtmittelraupe und wiederum mit einer Schutzschicht versehen werden.
Dieser recht aufwendige Fertigungsablauf zur Herstellung einer Rumpfschalenstruktur ist näher in den VDI-Fortschrittsberichten, Reihe 2: Fertigungstechnik Nr. 326 Dissertation 07/94 von Dipl.-Ing. Peter Heider 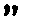 Lasergerechte Konstruktion und lasergerechte Fertigungsmittel zum Schweißen großformatiger Strukturbauteile", S. 3 bis 5 beschrieben.
In dieser Druckschrift ist ebenfalls das Laserstrahlschweißverfahren zum Herstellen von großformatigen Strukturbauteilen beschrieben, wobei auf S. 42 ff. des Berichts mögliche Bauweisen eines Strukturbauteils aufgezeigt werden. Bei allen Bauweisen wird aber immer von einem vorhandenen Hautfeld ausgegangen, welches - wie bereits beschrieben - an entsprechenden Stellen aufgedickt bzw. abgetragen werden muß und die größtmöglichen Abmessungen aufweisen sollte, um die notwendigen Längs- und Querstöße und damit das Gewicht zu minimieren.

Aus US 3,023,860 ist es bekannt, Blechteile zu einem Strukturbauteil zusammenzufügen, wobei jedoch ein gewelltes Blech mit Versteifungselementen und ein flaches Blech, nebeneinander angeordnet und zusammengefügt, das Strukturteil ergeben. Hier ist jedoch eine anforderungsgemäße und gewichtsoptimierte Auswahl unterschiedlicher Halbzeuge nicht vorgesehen.

Aufgabe der vorliegenden Erfindung ist es, ein großflächiges Strukturbauteil zu schaffen, welches die Nachteile aus dem Stand der Technik vermeidet und mit einem vereinfachten und damit weniger aufwendigen Fertigungsverfahren herstellbar ist und das notwendige Einbringen von Verstärkungen auf das Hautblech durch Einbringen von zusätzlichen Blechlagen mittels Nieter, oder Kleben bzw. das Abtragen von Blechdicken (mechanisch oder chemisch) minimiert wird und das Strukturbauteil gewichtsoptimiert ausgebildet ist.

Diese Aufgabe wird erfindungsgemäß mit den im Patentanspruch 1 angegebenen Maßnahmen gelöst.
Ein Verfahren zur Herstellung eines Strukturbauteils ist im Anspruch 13 angegeben. Ein Verfahren zur Herstellung von Profilteilen ist im Anspruch 17 angegeben.

Dabei ist insbesondere von Vorteil, dass die Hautbleche nicht mehr in den größtmöglichen Abmessungen verwendet werden, die dann mit aufwendigen Verfahren zusätzlich verstärkt bzw. Blechdicke abgetragen werden muß, um ein gewichtssparendes Strukturbauteil, insbesondere eine Rumpfschalenstruktur zu erzielen.
Es können kleinere Hautbleche, die im Fertigungsverfahren auch einfacher zu handhaben sind, mit Stringern und Spantsegmenten zu großen Schalen zusammengefügt werden. So können insbesondere Rumpfschalen in einer Größe gefertigt werden, die mit bisherigen Fertigungsvorrichtungen noch nicht möglich sind.

Weiterbildungen und vorteilhafte Ausgestaltungen sind in den Unteransprüchen 2 bis 12 sowie 14 bis 16 und 18 angegeben.

In der Zeichnung sind Ausführungsbeispiele der Erfindung dargestellt. Sie werden nachstehend anhand der Figuren 1 bis 6 näher beschrieben. In den Figuren sind gleiche Bauteile mit gleichen Bezugszeichen versehen.

Es zeigt:
- Fig. 1: eine Darstellung des Fertigungsablaufs bei der Herstellung eines Hautbleches mit Halbzeugen in einer ersten Ausführungsform,
- Fig. 1A: die Entstehung des Biegemomentes bei Überlappungsverbindungen,
- Fig. 2: eine Darstellung des Fertigungsablaufs bei der Herstellung von Profilteilen, wie Stringer, Clip und Spante,
- Fig. 3: eine erfindungsgemäße Rumpfschalenstruktur,
- Fig. 4: ein Strangpresspanel als weiteres Halbzeug für die Herstellung eines Hautbleches,
- Fig. 5: eine Darstellung einer Fügeverbindung von mehreren Strangpresspanels und
- Fig. 6: eine Fügeverbindung zwischen einem Strangpresspanel und Blechteilen.

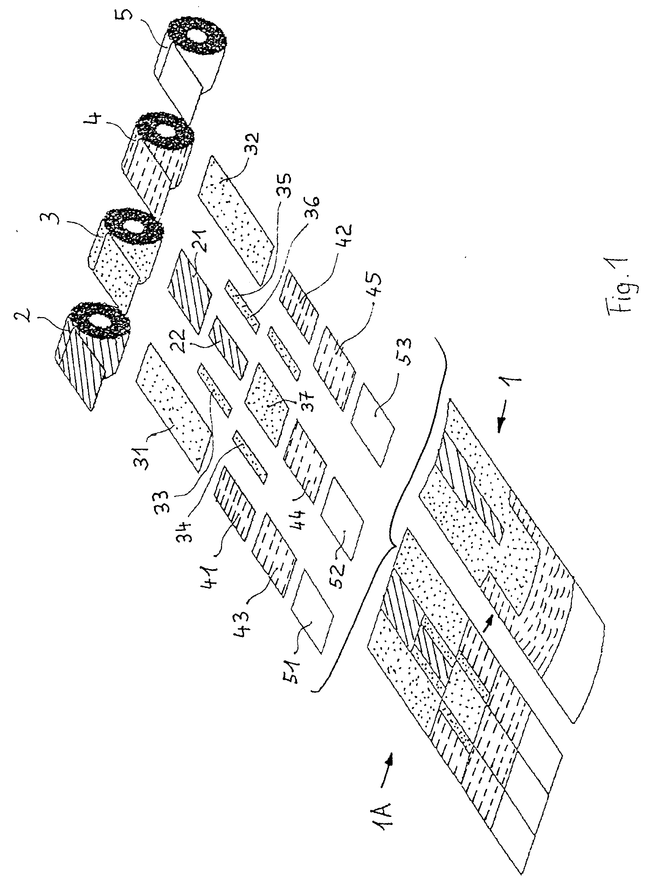

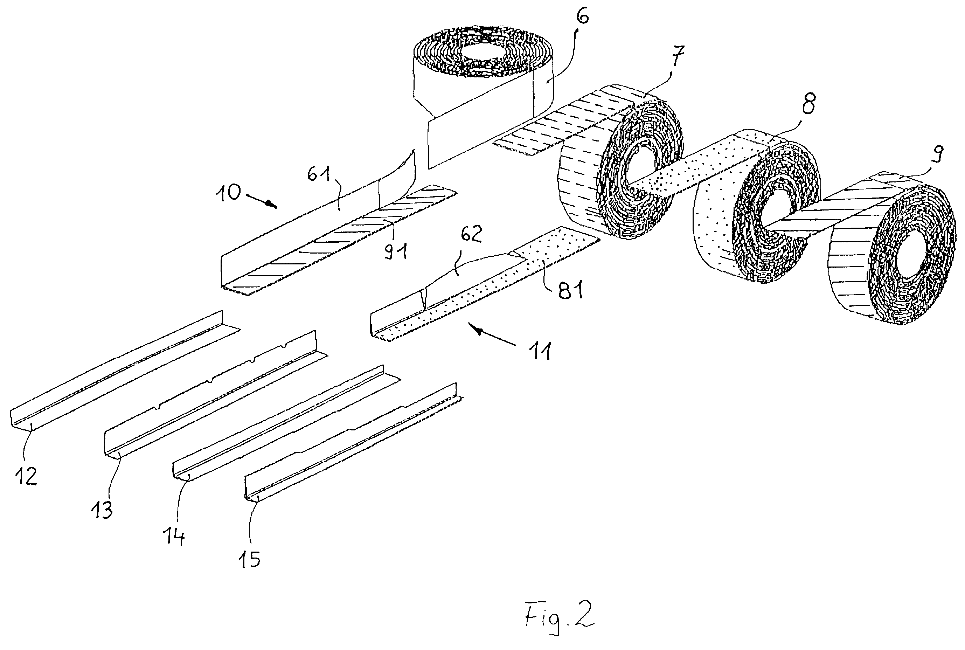

In Fig. 1 ist schematisch der Fertigungsablauf zur Herstellung eines großflächigen Strukturbauteils 1 ersichtlich. Das Strukturbauteil 1, insbesondere eine Flugzeugrumpfschale, wird aus mehreren, durch unterschiedliche Dicke bzw. unterschiedliche Materialien gekennzeichneten Halbzeugen 2, 3, 4 und 5 zusammengesetzt. Die Halbzeuge 2, 3, 4 und 5 sind in den Figuren durch eine unterschiedliche Schraffur gekennzeichnet, um die Dicken- bzw. Materialvariationen der einzelnen Bleche darzustellen. Bei der Materialauswahl ist zu beachten, dass eine gute Schweißbarkeit des Werkstoffs gegeben sein muß, was beispielsweise bei Aluminiumlegierungen wie AlMgSiCu, AlMgLi oder AlMgSc gegeben ist. Erfindungsgemäß werden die Hautfelder des Strukturbauteils 1 nur in der Größe zugeschnitten, wie es für die jeweilige Materialdicke notwendig ist. So ist ersichtlich, dass vom Halbzeug 2, d. h. beispielsweise eine Blechrolle mit vorgegebener Breite, Dicke und Material, ein benötigtes Blechteil 21 in der entsprechenden Länge abgeschnitten wird. Ein etwas schmaleres Blechteil 22 wird vom gleichen Halbzeug 2 entnommen und auf die benötigten Maße zugeschnitten. Der Blechzuschnitt von den anderen Halbzeugen 3, 4 und 5 erfolgt in der gleichen Verfahrensweise und es enstehen vom Halbzeug 3 die Blechteile 31, 32, 33, 34, 35, 36 und 37, vom Halbzeug 4 die Blechteile 41, 42, 43, 44 und 45 und vom Halbzeug 5 die Blechteile 51, 52 und 53. Falls es erforderlich ist, können die zugeschnittenen Blechteile jetzt chemisch bzw. mechanisch vorbehandelt oder bearbeitet oder mit Oberflächenschutz versehen werden. So ist es möglich, dass bestimmte Blechteile zu diesem Zeitpunkt chemisch abgetragen werden. Dies ist beispielsweise erforderlich, wenn eine bestimmte Kontur auf einem Blechteil erreicht werden soll oder Verstärkungen für Lasteinleitungspunkte notwendig sind.

Vorteilhaft ist an diesem Fertigungsablauf, dass nicht das gesamte Strukturbauteil 1 behandelt bzw. bearbeitet werden muß, sondern die noch nicht zusammengefügten einzelnen Blechteile. Damit ist erreicht, dass die Vorrichtungen zum Transport der Blechteile sowie das chemische Bad nicht der Maximalgröße der Rumpfschale, sondern nur den Abmessungen des größten einzelnen Blechteils entsprechen müssen, was insbesondere die Möglichkeit eines kostengünstigen chemischen Bades sowie dessen verbesserte Auslastung eröffnet.

Als weiteren Verfahrensschritt werden nach dem Zuschnitt der Blechteile 21, 22, 31, 32, 33, 34, 35, 36, 37, 41, 42, 43, 44,. 45, 51, 52 und 53 und einer eventuellen chemischen bzw. mechanischen Vorbehandlung die Vielzahl von Blechteilen zu einem großen Hautfeld bzw. Hautblech 1A zusammengeschweißt. Das Zusammenfügen erfolgt vorzugsweise stumpf mittels Laserstrahlschweißen, da mit diesem Verfahren eine hohe Schweißprozeßgeschwindigkeit erreicht werden kann (derzeit bis ca.10 bis 15 m/min) und fehlerarm, verzugsarm und wirtschaftlich gefertigt werden kann. Als ein weiteres Fügeverfahren zum Erzeugen von Stumpfnähten ist das Reibrührschweißen anwendbar, wie es beispielsweise in der Patentanmeldung WO 93/10935 beschrieben ist. Die Stumpfnahtschweißungen werden vorzugsweise dort vorgenommen, wo Dickensprünge aufgrund der Auslegung der Rumpfschale sowieso notwendig sind. Somit kann das Hautfeld 1A mit den notwendigen Dickenanpassungen der einzelnen Blechteile 21, 22, 31, 32, 33, 34, 35, 36, 37, 41, 42, 43, 44,. 45, 51, 52 und 53 optimal den Anforderungen und Belastungsfälten der fertigen Rumpfschale bzw. des fertigen Rumpfes angepaßt werden, wobei zusätzliche Verstärkungen sowie chemisches bzw. mechanisches Abtragen von Material am Hautfeld 1 minimiert werden oder sogar ganz wegfallen können.

Die Schweißnahtgeometrie und der Verlauf der Schweißnaht können am Hautfeld 1A bzw. am Strukturbauteil 1 so ausgelegt werden, dass weitere Funktionen ermöglicht werden wie der Einsatz als Rißstopper (auch Dummyschweißnaht genannt). Mit einem Rißstopper wird durch das entsprechende Schweißnahtdesign das Spannungsniveau reduziert und ein möglicher Rißfortschritt im Material wird verzögert. Weiterhin kann das Spannungsniveau von Hautfeldverbindungen positiv beeinflußt werden durch den Entfall des Biegemomentes aus der Längsnahtüberlappung. Zur Erläuterung ist in Fig. 1A die Entstehung des Zusatzmomentes bei Überlappungsverbindungen dargestellt. Aufgrund des herrschenden Innendruckes P, der auf die Rumpfschale und den beispielhaft dargestellten Hautfeldern 200 und 300 wirkt, entsteht eine auf die Hautfelder 200 und 300 wirkende Umfangskraft F. Durch die Überlappung von Bereichen der Hautfelder 200 und 300 entsteht ein Hautfeldversatz S. Um diesen Abstand S versetzt greift die Umfangskraft F am entsprechenden Hautfeld 200 bzw.300 an und es entsteht ein Biegemoment, welches das Spannungsniveau negativ beeinflußt. Mit dem Wegfall von Ü-berlappungsverbindungen tritt somit auch dieses Zusatzmoment mit seinen negativen Wirkungen nicht mehr auf.

Nach dem Herstellen des Hautfeldes 1A durch Stumpfnahtschweißungen der einzelnen Blechteile 21, 22, 31, 32, 33, 34, 35, 36, 37, 41, 42, 43, 44,. 45, 51, 52 und 53 ist als letzter Schritt das Biegen bzw. Umformen des Hautbleches 1A zum sphärisch gekrümmten Strukturbauteil 1 vorgesehen. Dieser Umformprozeß ist entsprechend der zu erreichenden Krümmung mit bekannten Umformverfahren, beispielsweise durch Streckziehen und/oder Walzen durchzuführen.

In Fig. 2 ist schematisch und beispielhaft der Fertigungsablauf für die Herstellung von Profilteilen dargestellt.
Die Profilteile werden ebenfalls aus Halbzeugen 6, 7, 8 und 9 zusammengefügt. Die Halbzeuge 6, 7, 8 und 9 bestehen vorzugsweise aus unterschiedlichem Material bzw. unterschiedlichen Dicken, die bedarfsweise zugeschnitten und zusammengefügt werden können. Gezeigt ist beispielsweise ein Profilteil 10, welches aus den Zuschnitteilen 61 und 91 zusammengeschweißt wurde. Ein weiteres Profilteil 11 ist aus den Zuschnitteilen 62 und 81 zusammengefügt. Vor dem Verschweißen ist es möglich, dass die entsprechenden Zuschnitteile 61, 91, 62 und 81 umgeformt oder mechanisch bearbeitet werden. So können ganz individuell Profilteile nach Bedarf hergestellt werden, ohne dass hohe Lagerhaltungskosten für entsprechende Fertigteile entstehen. Aufgrund einer rechnergestützten Fertigung ist es möglich, die entsprechenden Profilgeometrien je nach Bedarf abzurufen und damit beispielsweise für Flugzeugfamilien, deren Profilgeometrien als Daten vorhanden sind, jeweils die benötigten Profilteile wie Spante, Clip, Stringer oder Beschläge zu fertigen. Ersichtlich sind noch weitere Profilteile 12, 13, 14 und 15, wobei erkennbar ist, dass unterschiedliche Profilformen zur Anwendung kommen können.

Nach Fertigstellung der Profilteile, die als Spant, Clip und Stringer ausgebildet sind, werden diese für die Herstellung eine Rumpfschale eines Flugzeuges als Verstärkung in das Strukturbauteil 1 eingebracht. Eine fertige Rumpfschale 100 ist ausschnittsweise in Fig. 3 dargestellt. Die Rumpfschale 100 weist ein Hautfeld 1C auf, welches beispielsweise aus mehreren Blechteilen gemäß des in Fig. 1 beschriebenen Fertigungsverfahrens zusammengefügt wurde. Ersichtlich sind z.B. Stumpfnähte 101 und 102. Weitere Längsstumpfnähte können durch die Anordnung von Stringern auf dem Hautfeld 1C verdeckt werden. Die gemäß dem Fertigungsverfahren nach Fig. 2 oder aber in üblicher Bauweise hergestellten Stringer 103, 104, 105 und 106 werden auf dem Hautblech 1A bzw. am Strukturbauteil 1 in Flugzeuglängsrichtung zur Versteifung des Rumpfschale angeordnet. Die Stringer 103 bis 106 werden vorzugsweise mittels Schweißverfahren angefügt. Spante 107 und 108 sind an der Rumpfschale 100 quer zur Flugzeuglängsrichtung angeordnet. Sie dienen u. a. der Lasteinleitung aus den Leitwerken, die über Beschläge an den Spanten angeordnet ist. Die Spante 107 bzw. 108 sind mittels im Flugzeugbau bekannter Spant-/Clip-Nietverbindungen an den Stringern 103 bis 106 befestigt. Es ist ebenfalls möglich, auch die Profilteile Spant bzw. Clip mit der entsprechenden Partnerstruktur mit dem Verfahren Schweißen an der Rumpfstruktur 100 anzufügen.

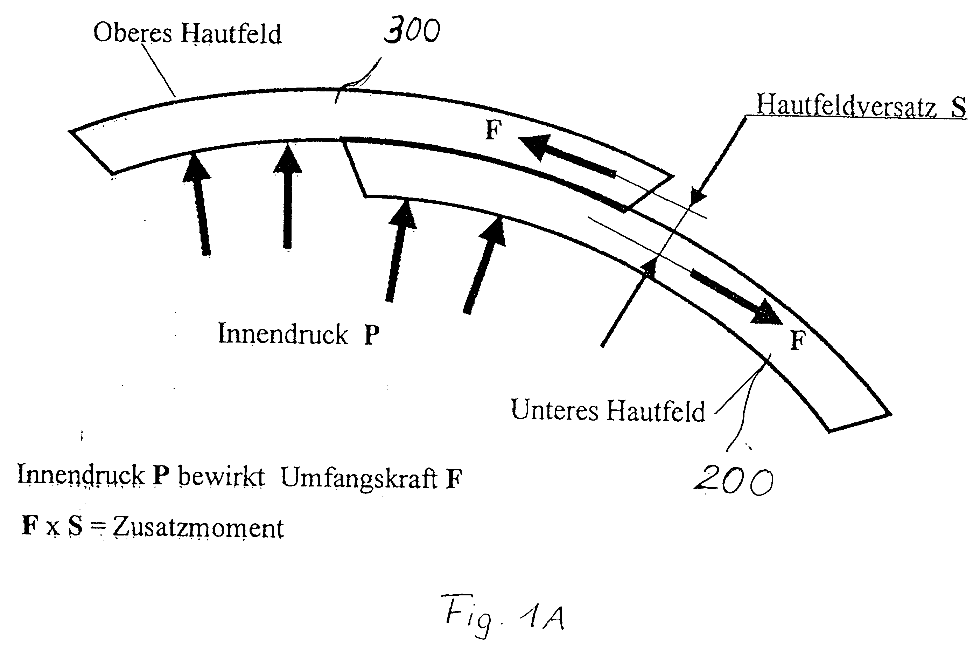

In Fig. 4 ist eine weitere Ausführung eines Halbzeugs 16 gezeigt, welches zur Bildung eines Strukturbauteils 1 verwendbar ist. Das Halbzeug ist als ein Strangpresspanel 16 ausgebildet. Ein solches stranggepresstes Großprofil 16 weist integrale Versteifungselemente 18 auf, die auf einem Grundelement 17 angeordnet sind und somit für den Einsatz im Flugzeugbau die in Differentialbauweise ausgeführten Strukturelemente Haut und Stringer ersetzen kann. Für das erfindungsgemäße Strangpresspanel 16 ist entsprechend der in Flugzeugrumpfstrukturen auftretenden Lasten das Grundelement 17 dünnwandig ausgebildet und längsverlaufende - als Stringer ausgebildete - Versteifungselemente 18A bis 18H dienen der integralen Versteifung des Bauteils 1. Das Strangpresspanel 16 besteht vorzugsweise aus einer schadenstoleranten Legierung, wie beispielsweise AlMgSiCu oder AlMgLi, und weist bezüglich der Dicke des dünnwandigen Grundelementes 17 (Hautdicke) und Form der Stringer 18A bis 18H eine für Flugzeugrumpfschalen typische Form auf. Mit einer Verwendung eines solchen Strangpresspanels 16 für eine Flugzeugrumpfschale reduzieren sich die Einzelteile, da Haut und Stringer ein in einem Herstellungsverfahren hergestelltes, integrales Halbzeug bilden. Fügeoperationen zwischen Haut und Stringer sowie Korrosionsangriffsstellen, beispielsweise Nietbohrungen und Fügespalten, die aufwendig behandelt und abgedichtet werden müssen, entfallen. Ein weiterer wesentlicher Vorteil ist darin zu sehen, dass aufgedickte Bereiche der Rumpfhaut in Längsrichtung unter Beachtung von strangpresstechnischen Grenzwerten direkt mitgepresst werden können. Dickenabstufungen der Haut (Grundelement 17) und eine lastabhängige Querschnittsanpassung der Stringer 18A bis 18H können innerhalb eines Strangpresspanels 16 durch chemisches oder mechanisches Fräsen realisiert werden.

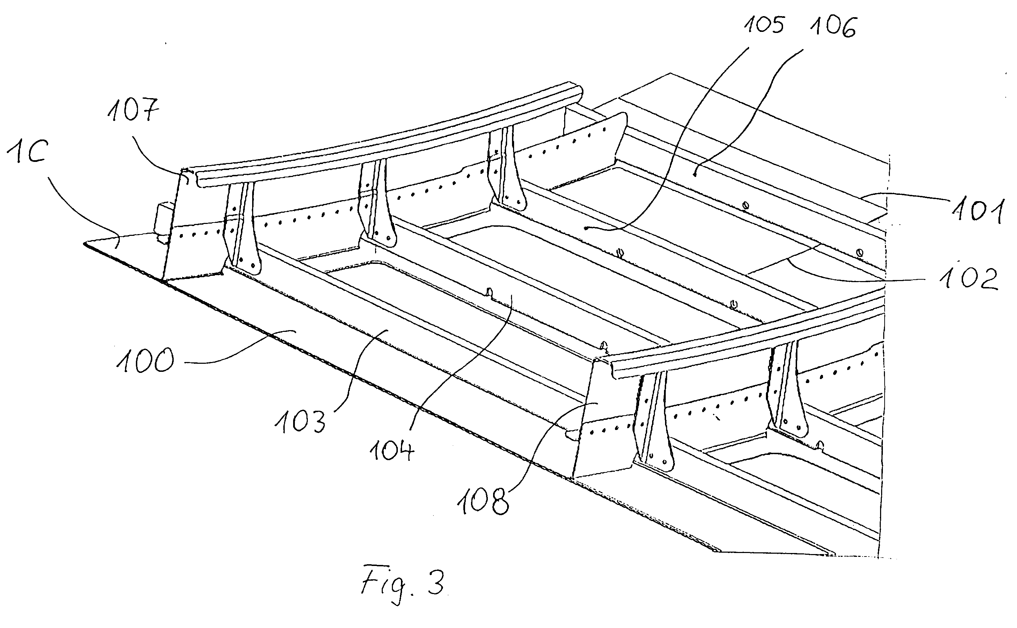

In Fig. 5 ist eine Fügeverbindung von mehreren Strangpresspanels 16, 16', 16'' ersichtlich.
Vorzugsweise mittels der Verfahren Laserstrahlschweißen oder Reibrührschweißen (Friction Stir Welding) können diese Strangpresspanels 16, 16', 16'' zu einem Hautfeld 1' einer Rumpfschale oder zumindest zum Teil eines Hautfeldes 1' gefügt werden. Die Fügeverbindungen sind mittels stumpfer Schweißnähte 19 und 19' realisiert.

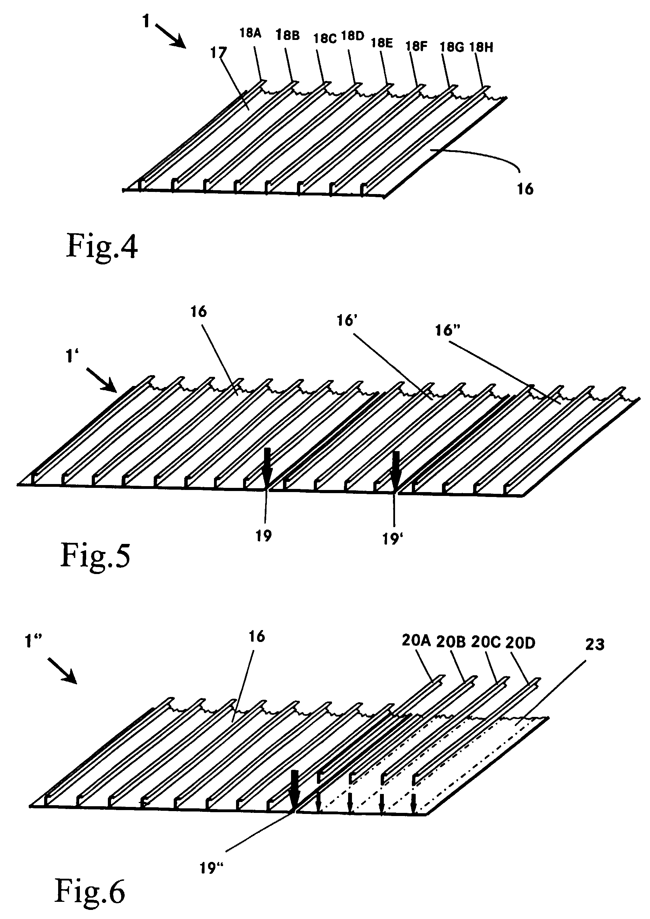

In Fig. 6 ist eine weitere Variante zur Herstellung eines Hautfeldes 1'' oder zumindest ein Teil desselben gezeigt. Zumindest ein Strangpresspanel 16 kann in Ergänzung oder in Kombination mit einem oder mehreren Blechteilen, z. B. einem gezeigten Blechteil 23, welches aus Blechhalbzeug 2 gefertigt wurde, zu dem Hautfeld 1'' zusammengefügt werden. Eine Stumpfschweißnaht 19'' entsteht. Dafür können die bereits beschriebenen Verfahren genutzt werden. Auf das Blechteil 23 werden in bekannter Differentialbauweise Stringer 20A bis 20D aufgebracht, vorzugsweise aufgeschweißt. Die Stringer können auch schon aufgebracht werden, bevor die Teile 16 und 23 zusammengefügt werden. Durch die Verwendung von Strangpresspanels 16 in Ergänzung bzw. in Kombination mit denen in Fig. 1 bis 3 beschriebenen Blechhalbzeugen und dem Verfahren, eine Vielzahl von kleineren, unterschiedlich dicken Blechen stumpf miteinander zu einer Großschale zu verschweißen, wird die Variationsmöglichkeit der verwendeten Halbzeuge und damit das Verbesserungspotential nochmals erhöht.

## Patentansprüche

1. Großflächiges Strukturbauteil (1) für ein Flugzeug, welches aus mindestens einem Hautfeld (1A) besteht, **dadurch gekennzeichnet, dass** das Hautfeld (1A) aus einer Vielzahl von Strukturelementen (16, 23; 21, 22, 31, 32, 33, 34, 35, 36, 37, 41, 42, 43, 44, 45, 51, 52, 53) gebildet ist, wobei die Strukturelemente entsprechend der Anforderungen und Belastungen in Material und Dicke auswählbar und mittels Schweißfügeverfahren verbindbar sind.

2. Großflächiges Strukturbauteil nach Anspruch 1,
**dadurch gekennzeichnet, dass**
die Verbindung der Strukturelemente (16, 23; 21, 22, 31, 32, 33, 34, 35, 36, 37, 41, 42, 43, 44, 45, 51, 52, 53) mittels einer Schweißstumpfnaht (101, 102; 19, 19', 19'') erfolgt, wobei die Schweißnähte vorzugsweise im Bereich der Dickensprünge, die sich aufgrund der Auslegung des Strukturbauteils (1) ergeben, verlaufen.

3. Großflächiges Strukturbauteil nach einem der Ansprüche 1 oder 2,
**dadurch gekennzeichnet, dass**
der Schweißnahtverlauf und die Schweißnahtgeometrie der Schweißnähte (101, 102; 19, 19', 19'') so ausgebildet sind, dass die Funktion als Rißstopper am Strukturbauteil (1) erfüllt wird.

4. Großflächiges Strukturbauteil nach einem der Ansprüche 1 bis 3,
**dadurch gekennzeichnet, dass**
das Strukturelement (21, 22, 31, 32, 33, 34, 35, 36, 37, 41, 42, 43, 44, 45, 51, 52, 53) als ein Blechteil ausgebildet ist, welches entsprechend der Anforderungsvorgaben aus Halbzeugen (2, 3, 4 oder 5) auswählbar ist.

5. Großflächiges Strukturbauteil nach einem der Ansprüche 1 bis 3,
**dadurch gekennzeichnet, dass**
das Strukturelement als ein Sprangpresspanel (16, 16', 16'') ausgebildet ist, wobei das Strangpresspanel (16, 16', 16'') im wesentlichen ein Grundelement (17) und mehrere integrale, längsverlaufende Versteifungselemente (18A bis 18H) aufweist.

6. Großflächiges Strukturbauteil nach Anspruch 5,
**dadurch gekennzeichnet, dass**
das Grundelement (17) dünnwandig und die längsverlaufenden Versteifungselemente (18A bis 18H) in Stringerform ausgebildet sind.

7. Großflächiges Strukturbauteil nach einem der Ansprüche 5 und 6,
**dadurch gekennzeichnet, dass**
das Strangpresspanel (16, 16', 16'') in Ergänzung bzw. in Kombination mit einem oder mehreren Blechteilen (23) zumindest einen Teil einer Flugzeugrumpfschale (1'') bildet.

8. Großflächiges Strukturbauteil nach einem der Ansprüche 1 bis 7,
**dadurch gekennzeichnet, dass**
das fertiggestellte Hautfeld (1A) sphärisch gekrümmt ausgebildet ist.

9. Großflächiges Strukturbauteil nach einem der Ansprüche 1 bis 7,
**dadurch gekennzeichnet, dass**
das fertiggestellte Hautfeld (1A) zylindrisch gekrümmt ausgebildet ist.

10. Großflächiges Strukturbauteil nach einem der Ansprüche 1 bis 9,
**dadurch gekennzeichnet, dass**
Profilteile (10, 11) als Stringer und/oder Spant und/oder Clip ausgebildet sind, wobei die Profilteile (10, 11) aus mehreren Zuschnitteilen (61, 91; 62, 81) bestehen, die entsprechend der Anforderungen und Belastungen in Material und Dicke auswählbar und mittels Fügeverfahren verbindbar sind.

11. Großflächiges Strukturbauteil nach einem der Ansprüche 1 bis 10,
**dadurch gekennzeichnet, dass**
Profilteile (10, 11) auf das fertiggestellte Hautfeld (1A) mittels Laserstrahlschweißen aufbringbar sind.

12. Großflächiges Strukturbauteil nach einem der vorangegangenen Ansprüche,
**dadurch gekennzeichnet, dass**
zumindest ein Strukturbauteil (1) zur Herstellung einer Rumpfschale (100) eines Flugzeuges verwendet wird.

13. Verfahren zur Herstellung eines großflächigen Strukturbauteils (1) mit folgenden Schritten:
■ von Halbzeugen (2, 3, 4, 5) werden entsprechend der Auslegungsvorgaben des Strukturbauteils (1) mit möglicher Variation von Materialwerkstoff und Materialdicke die Blechteile (21, 22, 31, 32, 33, 34, 35, 36, 37, 41, 42, 43, 44, 45, 51, 52, 53) abgelängt und zugeschnitten und/oder
■ Strangpressteile (16) werden entsprechend der Anforderungsvorgaben mittels Strangpressen hergestellt,
■ die Blechteile und/oder Strangpressteile (21, 22, 31, 32, 33, 34, 35, 36, 37, 41, 42, 43, 44, 45, 51, 52, 53) werden zu einem Hautfeld (1A) zusammengefügt,
■ das fertige Hautfeld (1A) wird nachbehandelt, insbesondere wird es mittels eines Umformprozesses, wie Walzen oder Streckziehen zu einem zylindrisch oder sphärisch gekrümmten Strukturbauteil (1) umgeformt.

14. Verfahren nach Anspruch 13,
**dadurch gekennzeichnet, dass**
die Strukturelemente, wie Blechteile und/oder Strangpressteile (16, 23; 21, 22, 31, 32, 33, 34, 35, 36, 37, 41, 42, 43, 44, 45, 51, 52, 53) mittels eines Schweißfügeverfahrens, beispielsweise Laserstrahlschweißen oder Reibrührschweißen, zu einem Hautfeld (1A, 1', 1'') zusammengefügt werden.

15. Verfahren nach einem der Ansprüche 13 oder 14,
**dadurch gekennzeichnet, dass**
die Strukturelemente, wie Blechteile und/oder Strangpressteile (16, 23; 21, 22, 31, 32, 33, 34, 35, 36, 37, 41, 42, 43, 44, 45, 51, 52, 53) vor dem Fügen chemisch oder mechanisch bearbeitet bzw. behandelt werden.

16. Verfahren nach einem der Ansprüche 13 bis 15,
**dadurch gekennzeichnet, dass**
auf das fertige Hautfeld (1A) bzw. auf das Strukturbauteil (1) Profilteile (10, 11) wie Stringer und/oder Spante und/oder Clips zur Verstärkung der Struktur (1) aufgebracht werden.

17. Verfahren zur Herstellung von Profilteilen mit folgenden Schritten:
■ von Halbzeugen (6, 7, 8, 9) werden entsprechend der vorgegebenen Profilgeometrien mit möglicher Variation von Materialwerkstoff und Materialdicke die Zuschnitteile (61, 91; 62, 81) abgelängt, zugeschnitten und bedarfsweise wärmebehandelt bzw. umgeformt,
■ die Zuschnitteile (61, 91; 62, 81) werden mittels Schweißfügeverfahren zu Profilteilen bzw. Strukturelementen (10, 11) zusammengefügt,
■ die Profilteile (10, 11) werden nachbearbeitet, insbesondere konturbearbeitet.

18. Verfahren nach Anspruch 17,
**dadurch gekennzeichnet, dass**
als Schweißfügeverfahren Laserstrahlschweißen verwendet wird.
